(19) Europäisches Patentamt
European Patent Office
Office européen des brevets

(11) **EP 3 404 345 B1**

(12) **EUROPEAN PATENT SPECIFICATION**

(45) Date of publication and mention
of the grant of the patent:
**08.12.2021 Bulletin 2021/49**

(51) Int Cl.:
*F25B 49/00* *(2006.01)*       *F25B 13/00* *(2006.01)*
*F25B 31/00* *(2006.01)*       *F25B 40/02* *(2006.01)*

(21) Application number: **18169798.8**

(22) Date of filing: **27.04.2018**

(54) **REFRIGERATION CYCLE DEVICE**

KÄLTEKREISLAUFVORRICHTUNG

DISPOSITIF DE CIRCUIT DE RÉFRIGÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2017 JP 2017087860**

(43) Date of publication of application:
**21.11.2018 Bulletin 2018/47**

(73) Proprietor: **Hitachi-Johnson Controls Air
Conditioning, Inc.
Tokyo 105-0022 (JP)**

(72) Inventors:
• **YOKOZEKI, Atsuhiko**
  **Tokyo, 105-0022 (JP)**
• **MIYATA, Yutaro**
  **Tokyo, 105-0022 (JP)**
• **NISHIDE, Masahiro**
  **Tokyo, 105-0022 (JP)**
• **UNO, Masaki**
  **Tokyo, 105-0022 (JP)**
• **NAITO, Koji**
  **Tokyo, 105-0022 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 2 103 888        EP-A1- 2 924 372
US-A1- 2014 130 528**

EP 3 404 345 B1

**Description**

**BACKGROUND OF THE INVENTION**

1. Field of the Invention

The present invention relates to a refrigeration cycle device configured to circulate refrigerant in a refrigeration cycle.

2. Description of the Related Art

Japanese Patent Application Publication No. 2008-157621 (hereinafter referred to as "Patent Document 1"), for example, discloses a refrigeration cycle device "comprising ... a bypass pipe connecting a discharge pipe and a suction pipe of a compressor ..., wherein ... opens the on-off valve if a detected pressure of the second pressure detector is less than a predetermine value, and closes the on-off valve if the detected pressure of the second pressure detector is equal to or greater than the predetermine value." EP 2 924 372 A1 discloses a refrigeration apparatus that performs a two-stage refrigerating cycle, including a high-temperature-side circulation circuit in which a high-temperature-side compressor, a high-temperature-side condenser, a high-temperature-side expansion valve, and a high-temperature-side evaporator are connected in series and a low-temperature-side circulation circuit in which a low-temperature-side compressor, a low-temperature-side condenser, a low-temperature-side expansion valve, and a low-temperature-side evaporator are connected in series.

**SUMMARY OF THE INVENTION**

In the technique disclosed in Patent Document 1, a temperature detector provided to the bypass pipe directly measures condensation temperature and evaporation temperature of the refrigerant. Furthermore, in a case where the refrigerant composition changes, predetermined control is performed based on the actual condensation temperature and evaporation temperature of the refrigerant.
In the technique disclosed in Patent Document 1, however, the refrigerant flowing in the bypass pipe makes no contribution to refrigeration performance. There is, therefore, room for further efficiency improvement. Moreover, the addition of the bypass pipe and the accompanying temperature detector invites a manufacturing cost increase.
The present invention has been made to solve the above problems and aims to provide a low-cost refrigeration cycle device which detects a change in a refrigerant composition appropriately.
The aforementioned object is solved by the invention according to the independent claim 1. Further preferred developments are described by the dependent claims. Particularly, a refrigeration cycle device according to the present invention is characterized in that a controller includes: a condenser pressure calculation part configured to estimate pressure loss from the discharge side of the compressor to a middle portion of the condenser based on a pressure detection value on the discharge side of the compressor, and to calculate pressure near the middle portion of the condenser based on the pressure detection value and the pressure loss; and a refrigerant composition detection part configured to estimate saturation temperature which is average temperature of dew and boiling points of the refrigerant, based on the pressure near the middle portion of the condenser, and to detect a change in the refrigerant composition based on a difference between the saturation temperature and a temperature detection value of the refrigerant near the middle portion of the condenser.
According to the present invention, it is possible to provide a low-cost refrigeration cycle device which detects a change in the refrigerant composition appropriately.

**BRIEF DESCRIPTION OF THE DRAWINGS**

FIG. 1 is a configuration diagram of an air conditioner according to a first embodiment not forming part of the present invention.
FIG. 2 is a Mollier diagram for the air conditioner according to the first embodiment.
FIG. 3 is a functional block diagram of a controller included in the air conditioner according to the first embodiment .
FIG. 4 is an explanatory diagram showing a relationship between pressure and saturated liquid temperature of refrigerant.
FIG. 5 is a flowchart of a process to be performed by the controller of the air conditioner according to the first embodiment.

FIG. 6 represents an experiment result showing a relationship between a refrigerant circulation amount ratio Grr and a pressure loss ΔP.

FIG. 7 is an explanatory diagram showing a relationship between actually-measured values and estimated values of the refrigerant circulation amount ratio.

FIG. 8 is an explanatory diagram showing a relationship between the pressure and the saturated gas temperature of refrigerant.

FIG. 9 represents an experiment result showing a relationship between the refrigerant circulation amount ratio Grr and the pressure loss ΔP.

FIG. 10 represents an experiment result showing a characteristic of a subcooling degree which is used to determine whether an amount of refrigerant is appropriate.

FIG. 11 is a configuration diagram of an air conditioner according to a second embodiment of the present invention.

FIG. 12 is a flowchart of a process to be performed by a controller of the air conditioner according to the second embodiment of the present invention.

## DETAILED DESCRIPTION OF THE EMBODIMENTS

The present invention will be hereinafter described in detail with reference to the accompanying drawings.

<<First Embodiment (not forming part of the invention)>>

<Configuration of Air Conditioner>

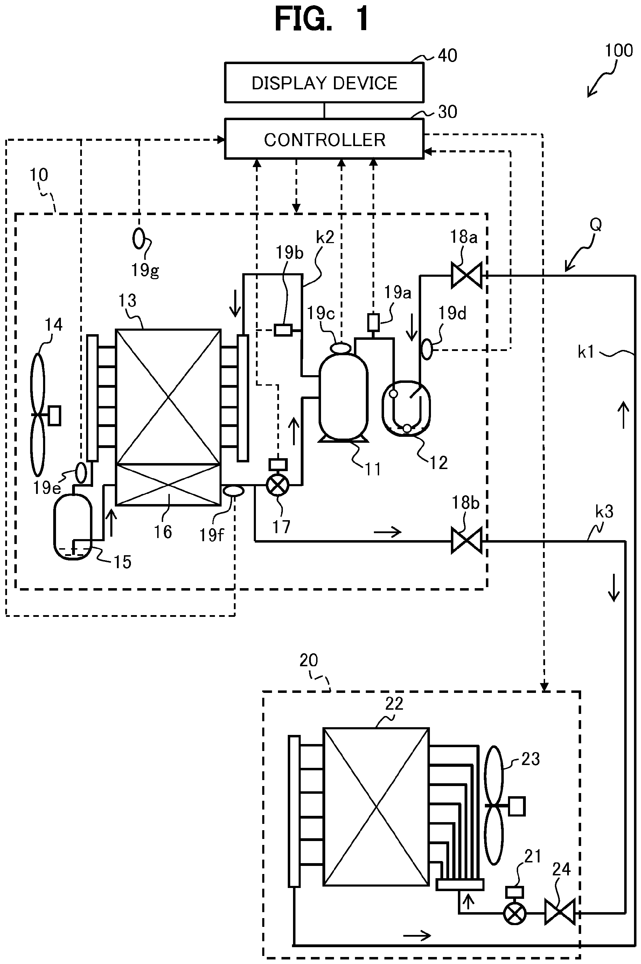

FIG.1 is a configuration diagram of an air conditioner 100 according to the first embodiment.

It should be noted that in FIG. 1, directions in which refrigerant flows are indicated with solid-line arrows, while signal lines are indicated with dashed-line arrows. The air conditioner 100 (refrigeration cycle device) illustrated in FIG. 1 is a device configured to perform a cooling operation, and includes a refrigerant circuit Q, a controller 30 and a display device 40.

The refrigerant circuit Q is a circuit in which the refrigerant circulates sequentially via a compressor 11, an outdoor heat exchanger 13 (condenser), an indoor expansion valve 21 (expansion valve), and an indoor heat exchanger 22 (evaporator) in this order in a refrigeration cycle. The refrigerant circuit Q includes components installed in an outdoor unit 10, components installed in an indoor unit 20, and connection pipes k1, k3.

(Outdoor Unit)

The outdoor unit 10 includes the compressor 11, an accumulator 12, the outdoor heat exchanger 13, an outdoor fan 14, a receiver 15, a subcooler 16, a liquid injection valve 17, a gas check valve 18a, a liquid check valve 18b and sensors (a suction pressure sensor 19a and so on).

The compressor 11 is a device configured to compress gaseous refrigerant flowing into the compressor 11 via the accumulator 12, in accordance with an instruction from the controller 30. A scroll compressor, for example, may be used as the compressor 11. The compressor 11 is not limited to the scroll compressor.

The accumulator 12 is a shell-shaped member configured to separate refrigerant flowing into the accumulator 12 from the indoor heat exchanger 22 via the connection pipe k1, into gaseous refrigerant and liquid refrigerant. The accumulator 12 is arranged on a suction side of the compressor 11. The installation of the accumulator 12 prevents liquid compression by the compressor 11, and thereby appropriately controls the dryness degree of the refrigerant sucked into the compressor 11.

The outdoor heat exchanger 13 is a heat exchanger configured to transfer heat from high-temperature high-pressure refrigerant discharged from the compressor 11, to external air sent to the outdoor heat exchanger 13 by the outdoor fan 14. In other words, the outdoor heat exchanger 13 functions as a condenser configured to condense refrigerant compressed by the compressor 11. In the example illustrated in FIG. 1, an upstream end of the outdoor heat exchanger 13 is connected to a discharge port of the compressor 11 via a pipe k2.

The outdoor fan 14 is a fan configured to send the external air to the outdoor heat exchanger 13 in accordance with an instruction from the controller 30, and is installed near the outdoor heat exchanger 13.

The receiver 15 is a shell-shaped member to store excessive refrigerant, and is installed downstream of the outdoor heat exchanger 13.

The subcooler 16 is a heat exchanger configured to subcool refrigerant guided into the subcooler 16 from the receiver 15 by transferring heat from the refrigerant to the external air. The subcooler 16 and the outdoor heat exchanger 13 are substantially integrated together. A downstream side of the subcooler 16 is connected to the indoor heat exchanger 22 sequentially via the liquid check valve 18b, the connection pipe k3, and the indoor expansion valve 21. The downstream side of the subcooler 16 is further connected to the compressor 11 via the liquid injection valve 17.

The liquid injection valve 17 is a valve to be opened at a predetermined opening degree in accordance with an instruction from the controller 30. Thereby, liquid refrigerant is injected into the compressor 11, and the latent heat of evaporation of the refrigerant controls discharge temperature of the compressor 11. Part of the liquid refrigerant cooled by the subcooler 16 is guided to the compressor 11 via the liquid injection valve 17, while the rest of the liquid refrigerant cooled by the subcooler 16 is guided to the indoor unit 20 via the connection pipe k3.

The gas check valve 18a and the liquid check valve 18b are valves configured to be opened after the air conditioner 100 is installed, and to thereby spread refrigerant, enclosed in the outdoor unit 10, over the entirety of the refrigerant circuit Q. The gas check valve 18a is installed upstream of the accumulator 12. An upstream side of the liquid check valve 18b is connected to somewhere between the subcooler 16 and the liquid injection valve 17, while a downstream side of the liquid check valve 18b is connected to an indoor solenoid valve 24 via the connection pipe k3.

The suction pressure sensor 19a is a sensor configured to detect pressure of refrigerant sucked into the compressor 11, and is installed on the suction side of the compressor 11.

A discharge pressure sensor 19b is a sensor configured to detect pressure of refrigerant discharged from the compressor 11, and is installed on a discharge side of the compressor 11.

A discharge temperature sensor 19c is a sensor configured to detect temperature of the refrigerant discharged from the compressor 11, and is installed near the discharge port of the compressor 11. Incidentally, temperature of an upper portion of a chamber (not illustrated) included in the compressor 11 may be measured as the discharge temperature.

A temperature sensor 19d is a sensor configured to detect temperature of an outlet side of the gas check valve 18a, and is installed near an outlet of the gas check valve 18a.

A temperature sensor 19e is a sensor configured to detect condensation temperature (saturated liquid temperature) of refrigerant, and is installed near a downstream end (outlet) of the outdoor heat exchanger 13.

A temperature sensor 19f is a sensor configured to detect temperature of refrigerant subcooled by the subcooler 16, and is installed near a downstream end of the subcooler 16.

An external air temperature sensor 19g is a sensor configured to detect temperature of the external air, and is installed in a predetermined location in the outdoor unit 10.

Furthermore, an indoor temperature sensor and the like, although not illustrated, are installed in the indoor unit 20. Detection values from the sensors are outputted to the controller 30.

(Indoor Unit)

The indoor unit 20 includes the indoor expansion valve 21, the indoor heat exchanger 22, an indoor fan 23 and the indoor solenoid valve 24.

The indoor expansion valve 21 is a valve configured to decompress refrigerant which is condensed by the outdoor heat exchanger 13 and is subcooled by the subcooler 16. To put it specifically, the indoor expansion valve 21 has a function of decompressing the refrigerant which flows from the subcooler 16 to the indoor heat exchanger 22 via the connection pipe k3. Incidentally, an opening degree of the indoor expansion valve 21 is controlled by the controller 30.

The indoor heat exchanger 22 is a heat exchanger configured to transfer heat from indoor air (air in the space to be air-conditioned) to the refrigerant decompressed by the indoor expansion valve 21. To put it specifically, the indoor heat exchanger 22 functions as an evaporator configured to evaporate the refrigerant decompressed by the indoor expansion valve 21. Thus, the latent heat of evaporation of the refrigerant flowing inside the indoor heat exchanger 22 cools the indoor air.

The indoor fan 23 is a fan configured to send the external air to the indoor heat exchanger 22 in accordance with an instruction from the controller 30, and is installed near the indoor heat exchanger 22.

The indoor solenoid valve 24 is a valve configured to be opened to make refrigerant flow inside the indoor unit 20 when the indoor unit 20 is operated.

It should be noted that in a case where the indoor expansion valve 21 has a fully-closable configuration, the indoor solenoid valve 24 may be omitted. In a case where, however, a temperature expansion valve or a similar thing is used as the indoor expansion valve 21, the indoor solenoid valve 24 is needed to switch the indoor unit 20 between operation and stop because the temperature expansion valve or the similar thing serving as the indoor expansion valve 21 cannot be closed when the operation of the indoor unit 20 is stopped.

(Controller)

The controller 30 includes, although not illustrated, a central processing unit (CPU), a read-only memory (ROM), a random-access memory (RAM) and electronic circuits inclusive of interfaces . The controller 30 is configured to read programs stored in the ROM, to expand the programs in the RAM, and to cause the CPU to execute various processes. Based on the detection values from the sensors and manipulation signals from a remote controller (not illustrated), the controller 30 controls the devices including the compressor 11 and the indoor expansion valve 21.

(Display Device)

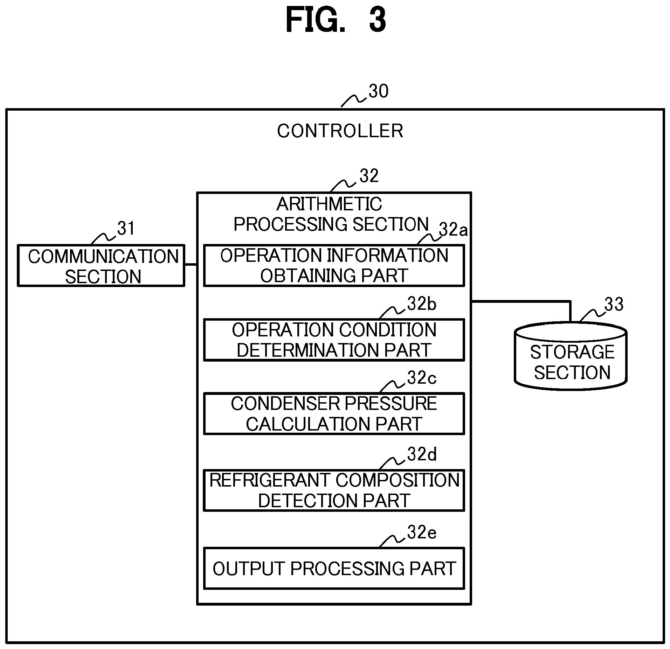

The display device 40 is, for example, a liquid crystal display or a 7-segment display device. The display device 40 has a function of displaying process results of the controller 30 (things such as a detection result from a refrigerant composition detection part 32d, which will be described later: see FIG. 3).

<Refrigeration Cycle>

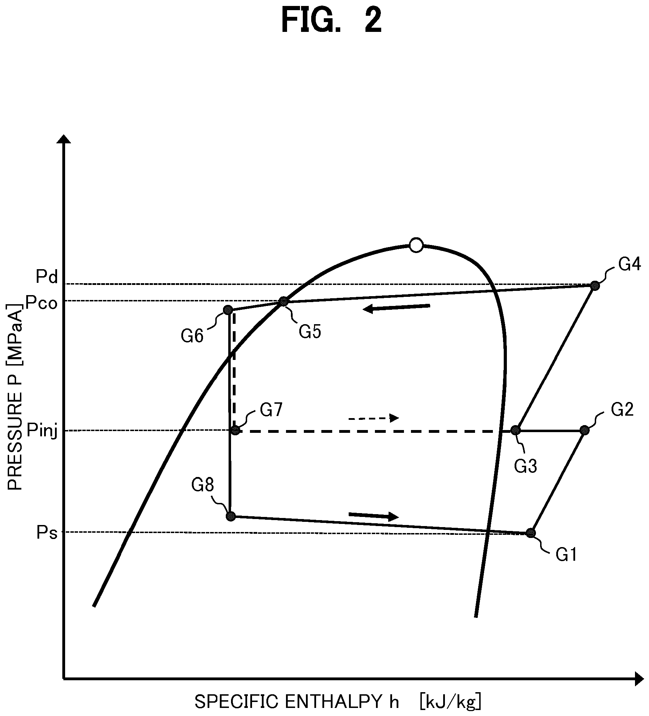

FIG. 2 is a Mollier diagram for the air conditioner 100 according to the first embodiment (see FIG. 1 depending on the necessity). Incidentally, in FIG. 2, the horizontal axis represents specific enthalpy h [kj/kg] of the refrigerant, while the vertical axis represents pressure P [MPaA] of the refrigerant.

Refrigerant sucked into the compressor 11 illustrated FIG. 1 is in state G1. Compression of the refrigerant raises the specific enthalpy and pressure of the refrigerant. Thus, the refrigerant turns into state G2 at an intermediate pressure point (pressure Pinj). At this point, refrigerant in state G7 with a low specific enthalpy is injected into the compressor 11 from the liquid injection valve 17. Thus, the refrigerant in state G2 turns into state G3 because of a decrease in the specific enthalpy. Thereafter, the refrigerant in state G3 turns into state G4 by compression of the refrigerant by the compressor 11 to a predetermined compressor discharge pressure Pd. Eventually, the refrigerant, high in temperature and pressure, is discharged from the compressor 11. To put it specifically, temperature of the discharged gas from the compressor 11, or superheating degree of the discharged gas from the compressor 11, is controlled by controlling the opening degree of the liquid injection valve 17.

After flowing into the outdoor heat exchanger 13, the refrigerant is cooled and condensed by transferring heat to the external air, and thus turns into state G5. The refrigerant in state G5 is guided into the receiver 15. While passing through the receiver 15, the refrigerant is in saturated liquid state since liquid refrigerant is usually present in the receiver 15. After flowing into the subcooler 16 from a lower portion of the receiver 15, the refrigerant is cooled by transferring heat to the external air, and turns into state G6. Part (indicated dashed-line) of the refrigerant in state G6 is decompressed by the liquid injection valve 17, and turns into state G7. As discussed above, this part of the refrigerant in state G7 is injected into the compressor 11.

Meanwhile, the rest of the refrigerant in state G7 is guided to the indoor unit 20 via the connection pipe k3, and is decompressed by the indoor expansion valve 21. Thus, the refrigerant turns into state G8 which is a low-temperature gas-liquid two phase state, and is guided into the indoor heat exchanger 22. While passing through the indoor heat exchanger 22, the refrigerant evaporates by transferring heat from the indoor air to the refrigerant, and turns into state G1. Thereafter, the refrigerant in state G1 is guided to the suction side of the compressor 11 via the connection pipe k1, the accumulator 12 and the like.

Note that FIG. 2 illustrates the Mollier diagram for the case where: an appropriate amount of refrigerant is enclosed in the refrigerant circuit Q; and changes in the refrigerant, which will be discussed later, do not occur. In this case, while in state G6 illustrated in FIG. 2, the subcooling degree of the refrigerant takes on an appropriate value. This makes it possible to sufficiently secure specific enthalpy difference (difference in specific enthalpy between state G8 and state G1) in the indoor heat exchanger 22. The indoor air, therefore, is cooled appropriately.

<Configuration of Controller>

FIG. 3 is a functional block diagram of the controller 30 included in the air conditioner 100 (see FIG. 1 depending on the necessity).

As shown in FIG. 3, the controller 30 includes a communication section 31, an arithmetic processing section 32 and a storage section 33.

The communication section 31 has a function of communicating with the devices and the sensors.

The arithmetic processing section 32 has a function of performing arithmetic processes based on predetermined programs. As shown in FIG. 3, the arithmetic processing section 32 includes an operation information obtaining part 32a, an operation condition determination part 32b (determination part), a condenser pressure calculation part 32c, the refrigerant composition detection part 32d and an output processing part 32e.

The operation information obtaining part 32a has a function of: obtaining the above-discussed detection values from the sensors; and obtaining the opening degree of the liquid injection valve 17 and the revolution speed of the compressor 11.

The operation condition determination part 32b has a function of determining whether the refrigeration cycle condition in the air conditioner 100 is suitable to detect a refrigerant composition.

The condenser pressure calculation part 32c estimates pressure loss from the discharge side of the compressor 11 to an outlet of the outdoor heat exchanger 13 based on a pressure detection value on the discharge side of the compressor 11, and calculates pressure near the outlet of the outdoor heat exchanger 13 based on the pressure detection value and the pressure loss.

The refrigerant composition detection part 32d estimates saturated liquid temperature of the refrigerant based on the pressure near the outlet of the outdoor heat exchanger 13, and detects a change in the refrigerant composition based on a difference between the saturated liquid temperature and a temperature detection value of the refrigerant near the outlet of the outdoor heat exchanger 13.

In a case where the refrigerant composition detection part 32d detects occurrence of a change in the refrigerant composition, the output processing part 32e outputs things such as information about the change occurrence. Based on the process by the output processing part 32e, predetermined information is displayed on the display device 40. Detailed descriptions will be provided for the process to be performed by the controller 30.

<Change in Refrigerant Composition>

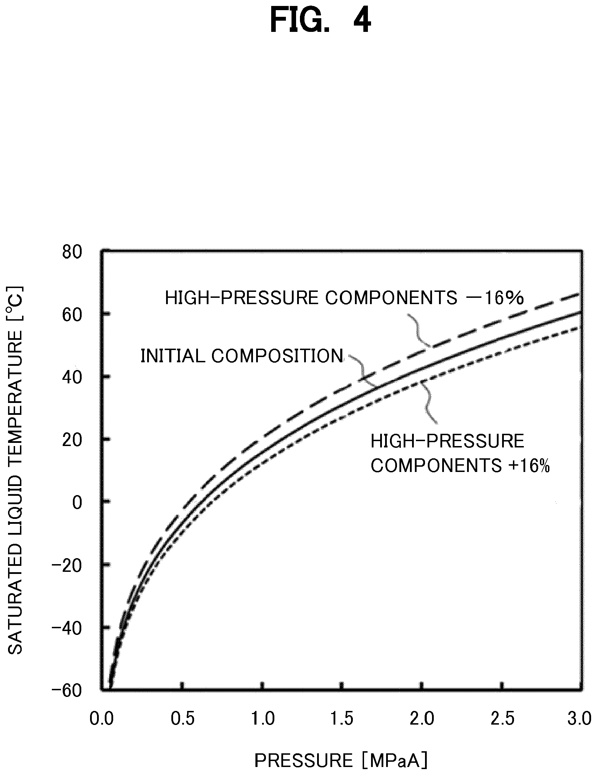

FIG. 4 is an explanatory diagram showing a relationship between pressure and saturated liquid temperature of refrigerant.

Incidentally, in FIG. 4, the horizontal axis represents the pressure of the refrigerant, while the vertical axis represents the saturated liquid temperature of the refrigerant.

The "initial composition" represents a relationship between the pressure and the saturated liquid temperature of the refrigerant whose composition remains as proper as when the refrigerant is initially enclosed into the refrigerant circuit (hereinafter referred to as "at time of the initial enclosure"). As shown in FIG. 4, the saturated liquid temperature of the refrigerant becomes higher as the pressure of the refrigerant becomes higher. Incidentally, an explanation will be later provided for what the "high-pressure components -16%" and the "high-pressure components +16%" in FIG. 4 mean.

Note that in the case illustrated in FIG. 4, R448A is used as the refrigerant. R448A is a non-azeotropic mixed refrigerant obtained by mixing R32, R125, R134a, R1234yf and R1234ze (E) together. Their mixing ratios are, for example, 26 wt%, 26 wt%, 21 wt%, 20 wt% and 7 wt% in the listed order. Particularly, R448A is characterized in that: it is incombustible (ANSI/ASHRAE Standard 34-1992 Safety Group A1); and its global warming potential (GWP) is less than 1500 (1387 is its factor listed in the Fourth Assessment Report of the United Nations Intergovernmental Panel on Climate Change (IPCC)) which is less than R404A's factor (3922) and R410A's factor (2088).

Note that the "non-azeotropic mixed refrigerant" is a mixed refrigerant in which each component has its own phase change.

Among the five refrigerant components (R32, R125, R134a, R1234yf and R1234ze (E)) included in R448A, the first two refrigerant components have boiling points at atmospheric pressure which are in a range of approximately -52 to -48 °C. Meanwhile, pressures of the two refrigerant components at a condensation temperature of 40 °C are approximately 2.5 MPaA. The two refrigerant components are thus classified as so-called high-pressure components (which are hard to condense and easy to evaporate).

In contrast, the three other refrigerant components have boiling points at atmospheric pressure which are in a range of approximately -30 to -19 °C. Meanwhile, pressures of the three refrigerant components at a condensation temperature of 40 °C are approximately 1 MPaA. The three refrigerant components are thus classified as so-called low-pressure components (which are easier to condense and harder to evaporate than the high-pressure components).

Incidentally, if the refrigerant starts to leak, more of the high-pressure refrigerant components may leak than the low-pressure refrigerant components, or vice versa. For example, the upper portion of the inside of the receiver 15 illustrated in FIG. 1 is full of gaseous refrigerant, which includes more of the high-pressure refrigerant components (R32, R125) with higher condensation pressure than the low-pressure refrigerant components. If, therefore, a leaking part is in the upper part of the receiver 15, more of the high-pressure refrigerant components leak than the low-pressure refrigerant components. Thus, the proportion of the low-pressure refrigerant components in the composition of refrigerant remaining in the refrigeration circuit Q becomes higher than the proportion of the low-pressure refrigerant components in the composition of refrigerant initially enclosed into the refrigeration circuit.

The saturated liquid temperature of the refrigerant in which the proportion of the low-pressure refrigerant components therein becomes higher than that corresponding to the composition of the initially enclosed refrigerant (hereinafter referred to as an "initial composition") is indicated, for example, by a dashed line representing "high-pressure components -16%" in FIG. 4 (the proportion of the high-pressure refrigerant components therein becomes 16 % lower than that corresponding to the initial composition). The saturated liquid temperature at a pressure of 2 MPaA in this case, for example, is approximately 5.4 °C higher than that corresponding to the initial composition. If, therefore, the condensation temperature were controlled in the same way as at time of the initial enclosure, the outdoor fan 14 would be controlled, resulting in a rise in the condensation temperature of the refrigerant. This would invite a decrease in the performance of the refrigerant on the condensation side. Furthermore, the rise in the condensation temperature of the refrigerant would similarly raise the evaporation temperature of the refrigerant, and would in return decrease the performance of the refrigerant on the evaporation side.

Meanwhile, in a case where the refrigerant is filled into the refrigerant circuit Q, for example, using a wrong method, there is likelihood that the proportion of the high-pressure refrigerant components therein becomes higher than that corresponding to the initial composition. Let us assume a specific case. In a container (not illustrated) filled with refrigerant, a space above the liquid surface of the refrigerant is full of the high-pressure refrigerant components (refrigerant components harder to condense and having lower boiling points). Some containers have a pipe whose distal end is higher than the liquid surface of the refrigerant, and from which the refrigerant is taken out, although depending on types of the containers. When the refrigerant needs to be filled into the refrigerant circuit Q from one of such containers, a worker holds the container upside down, and pours liquid refrigerant into the refrigerant circuit Q via the pipe.

In this respect, if the worker tries to pour the refrigerant thereinto while inadvertently forgetting to hold the container upside down, a more-than-usual amount of high-pressure refrigerant components will enter the refrigerant circuit Q. This likely results in a decrease in the saturated liquid temperature although the pressure remains unchanged, as indicated with another dashed line representing "high-pressure components +16%" in FIG. 4.

In addition, in a case where the worker inadvertently fills a different and wrong type of refrigerant into the refrigerant circuit Q, the refrigerant composition becomes improper. With these cases taken into consideration, the embodiment is configured to detect a change in the refrigerant composition, and to control the devices based on a result of the detection.

<Process to be Performed by Controller>

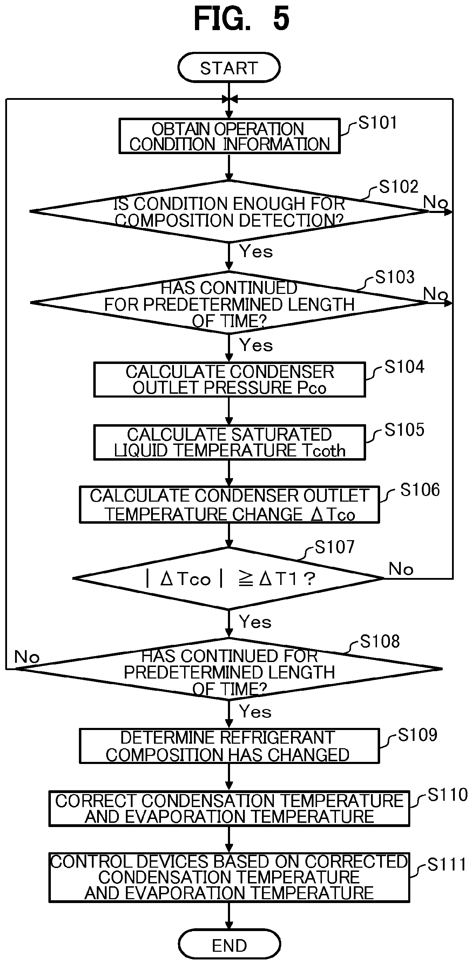

FIG. 5 is a flowchart of a process to be performed by the controller 30 (see FIGS 1 and 3, depending on the necessity). Incidentally, the flowchart is on condition that cooling operation is being performed at time of "start" in FIG. 5.

In step S101, the controller 30 causes the operation information obtaining part 32a to obtain operation condition information about the air conditioner 100, such as the detection values from the above-discussed sensors, the opening degree of the liquid injection valve 17, and the revolution speed of the compressor 11.

Next, in step S102, the controller 30 causes the operation condition determination part 32b to, based on the operation condition information obtained in step S101, determine whether the condition makes it possible to detect the refrigerant composition. Incidentally, examples of the condition which makes it possible to detect the refrigerant composition include the followings.

(a) The suction superheating degree of the compressor 11 to be calculated based on the suction pressure of the compressor 11 and the outlet-side temperature of the gas check valve 18a is in an appropriate range (for example, 5K or greater).
(b) The outlet-side temperature of the gas check valve 18a is in an appropriate range (for example, 20 °C or less).
(c) The temperature of the external air is in an appropriate range (for example, 0 °C or greater but 43 °C or less).
(d) The revolution speed of the compressor 11 is in an appropriate range (for example, 50 % or greater of the rated revolution speed).
(e) The amount of refrigerant enclosed in the refrigerant circuit Q is in an appropriate range. In other words, the amount of excessive refrigerant stored in the receiver 15 is appropriate.

Although the above-listed items (a) to (e) are examples of criteria to be used to determine whether the refrigerant composition can be detected, the criteria are not limited to these. The controller 30 may be configured to determine "the refrigerant composition can be detected," in a case where all of the items (a) to (e) are satisfied. Otherwise, the controller 30 may be configured to determine "the refrigerant composition can be detected, " in a case where a predetermined item (s) included the items (a) to (e) is (are) satisfied. Incidentally, descriptions will be later provided for how the controller 30 makes a determination on the item (e).

If the controller 30 determines in step S102 in FIG. 5 that the condition does not make it possible to detect the refrigerant composition (if No in step S102), the process of the controller 30 returns to step S101. For example, if the operation condition determination part 32b determines that the amount of refrigerant enclosed in the refrigerant circuit Q is improper, the controller 30 stops the refrigerant composition detection part 32d from detecting a change in the refrigerant composition.

On the other hand, if the controller 30 determines in step S102 that the condition is stable enough to detect the refrigerant composition (if Yes in step S102), the process of the controller 30 proceeds to step S103.

In step S103, the controller 30 determines whether the stable condition enough to detect the refrigerant composition has continued for a predetermined length of time (for example, for approximately five minutes).

If the controller 30 determines in step S103 that the stable condition has not continued for the predetermined length of time (if No in step S103), the process of the controller 30 returns to step S101. On the other hand, if the controller 30 determines that the stable condition has continued for the predetermined length of time (if Yes in step S103) , the process of the controller 30 proceeds to step S104.

In step S104, the controller 30 causes the condenser pressure calculation part 32c to calculate condenser outlet pressure Pco. Incidentally, the condenser outlet pressure Pco is pressure near the outlet of the outdoor heat exchanger 13, that is to say, the condenser.

For the purpose of calculating the condenser outlet pressure Pco, to begin with, the controller 30 estimates the pressure loss $\Delta P$ from the discharge side of the compressor 11 (see state G4 in FIG. 2) to the outlet of the outdoor heat exchanger 13 (see state G5 in FIG. 2). The pressure loss $\Delta P$ is calculated based on a refrigerant circulation amount ratio Grr shown in Equation (1) given below. Incidentally, coefficients $\alpha$, $\beta$ and a pipe length correction coefficient KL are already known.

$$\Delta P = Pd - Pco = \alpha \times Grr^{\beta} \times KL \qquad \dots \text{Equation (1)}$$

where: Pd is compressor discharge pressure [MPa]; Pco is the condenser outlet pressure [MPa]; Grr is the refrigerant circulation amount ratio [-]; $\alpha$, $\beta$ are coefficients [-]; and KL is the pipe length correction coefficient [-].

Furthermore, the refrigerant circulation amount ratio Grr is calculated based on Equation (2) given below. Incidentally, compressor reference revolution speed Fto, reference suction pressure Pso, and a flow rate ratio coefficient Kv of the injection valve are already known.

$$Grr = \frac{Ft}{Fto} \times \frac{Ps}{Pso} \times (1 + MV \cdot Kv) \qquad \dots \text{Equation (2)}$$

where: Ft is compressor revolution speed [s$^{-1}$] ; Fto is the compressor reference revolution speed [s$^{-1}$] ; Ps is suction pressure [MPaA]; Pso is the reference suction pressure [MPaA]; MV is an injection valve opening degree ratio [-]; and Kv is the flow rate ratio coefficient [-] of the injection valve.

It should be noted that suction superheating degree correction, represented by the fourth term in Equation (3) given below, to Equation (2) is effective to increase the accuracy of Equation (2) . In this respect, SHs is superheating degree obtained from: suction pressure and suction temperature of the compressor 11 (or suction pressure of the compressor 11 and refrigerant temperature on the outlet side of the gas check valve 18a). Ksh is an already-known coefficient.

$$Grr = \frac{Ft}{Fto} \times \frac{Ps}{Pso} \times (1 + MV \cdot Kv) \times (1 - SHs \times Ksh) \qquad \text{Equation (3)}$$

where: SHs is suction gas superheating degree [K]; and Ksh is a suction gas density superheating degree correction coefficient [-] .

As discussed above, the controller 30 causes the refrigerant composition detection part 32d to estimate the pressure loss $\Delta P$ of the refrigerant using the refrigerant circulation amount ratio Grr based on at least the suction pressure Ps and the revolution speed Ft of the compressor 11 (Equation (1), and Equation (2) or Equation (3)).

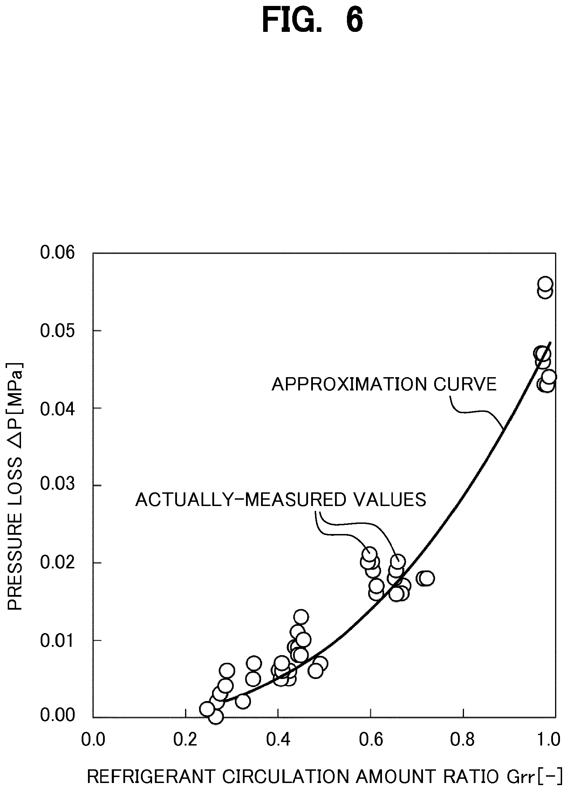

FIG. 6 represents an experiment result showing a relationship between the refrigerant circulation amount ratio Grr and the pressure loss $\Delta P$.

As shown in FIG. 6, a correlation exists between the actually-measured values of the refrigerant circulation amount ratio Grr and the actually-measured values of the pressure loss $\Delta P$. An approximation curve representing the relationship between the refrigerant circulation amount ratio Grr and the pressure loss $\Delta P$ can be obtained based on data on the "actually-measured values" shown in FIG. 6. A predetermined equation for producing this approximation curve (corresponding to Equation (1) expressed with $\Delta P = \alpha \times Grr^{\beta} \times KL$) is stored in the storage section 33 (see FIG. 3) in advance. The pressure loss $\Delta P$ is calculated (estimated) using the refrigerant circulation amount ratio Grr based on Equation (2).

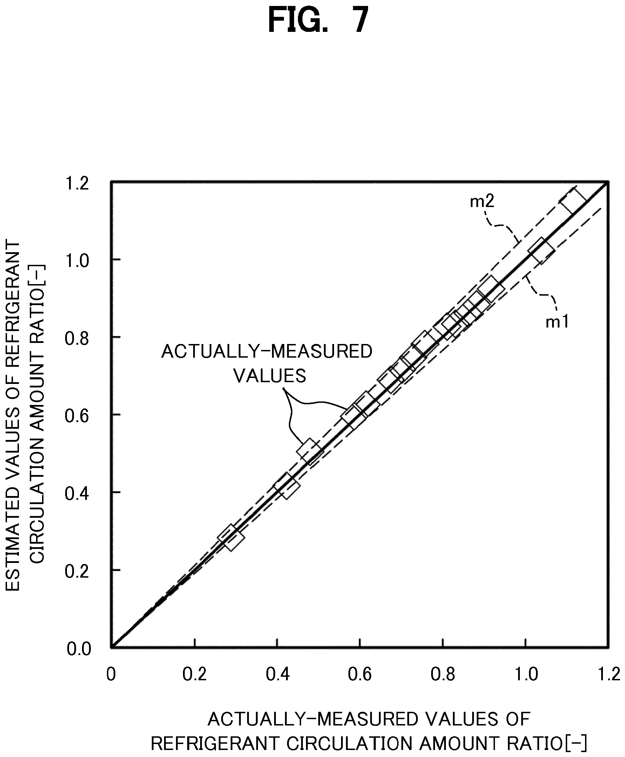

FIG. 7 is an explanatory diagram showing a relationship between actually-measured values and estimated values of the refrigerant circulation amount ratio. The horizontal axis in FIG. 7 represents the actually-measured values of the refrigerant circulation amount ratio, which correspond to the "actually-measured values" in FIG. 6. The vertical axis in FIG. 7 represents the estimated values of the refrigerant circulation amount ratio based on Equation (2).

In the example shown in FIG. 7, the actually-measured values of the refrigerant circulation amount ratio are substantially equal to the estimated values of the refrigerant circulation amount ratio with high accuracy. The differences of the actually-measured values (represented by dashed lines m1, m2) from the estimated values are within a range of -5% to +5%, inclusive. From Fig. 7, it can be learned that the pressure loss $\Delta P$ expressed with Equation (1) can be estimated with sufficient accuracy, based on the refrigerant circulation amount ratio Grr (the estimated values of the refrigerant circulation amount ratio) based on Equation (2).

Based on the pressure loss ΔP estimated based on the refrigerant circulation amount ratio Grr as well as the compressor discharge pressure Pd (a detected value from the discharge pressure sensor 19b illustrated in Fig. 1), the condenser outlet pressure Pco is calculated using Equation (4) given below.

$$Pco = Pd - \Delta P \qquad \qquad \ldots \mathtt{Equation\ (4)}.$$

As discussed above, the controller 30 calculates the condenser outlet pressure Pco in step S104 in FIG. 5.

Next, in step S105, the controller 30 causes the refrigerant composition detection part 32d to calculate saturated liquid temperature Tcoth of the refrigerant. In other words, based on the condenser outlet pressure Pco calculated in step S104, the controller 30 calculates (estimates) the saturated liquid temperature Tcoth of the refrigerant with the initial composition, using Equation (5) given below. Incidentally, coefficients a, b, c, d included in Equation (5) are already known.

$$Tcoth = a \times Pco^3 + b \times Pco^2 + c \times Pco + d \qquad \ldots \mathtt{Equation\ (5)}$$

where: Tcoth is the saturated liquid temperature [°C] with the initial composition; and a, b, c, d are coefficients [-].

It should be noted that the saturated liquid temperature Tcoth may be calculated using the polynomial expressed with Equation (5), or a data table from which to derive the saturated liquid temperature Tcoth based on the condenser outlet pressure Pco may be stored in the storage section 33 (see FIG. 3) in advance.

Next, in step S106, the controller 30 calculates a condenser outlet temperature change ATco based on Equation (6) given below. In other words, the controller 30 obtains the condenser outlet temperature change ATco by calculating a difference between a detected value of the temperature sensor 19e installed near the outlet of the outdoor heat exchanger 13 and the saturated liquid temperature Tcoth calculated in step S105. The condenser outlet temperature change ATco is a numerical value representing a difference of the actually-measured value from the saturated liquid temperature Tcoth of the refrigerant with the initial composition (that is to say, the estimated condenser outlet temperature).

$$\Delta Tco = Tco - Tcoth \qquad \qquad \ldots \mathtt{Equation\ (6)}$$

where ATco is an increased amount [K] in the condenser outlet temperature due to a change in the refrigerant composition.

Thereafter, in step S107, the controller 30 determines whether |ATco| is not less than a predetermined threshold ΔT1 (for example, 2K). If |ATco| is not less than the predetermined threshold ΔT1 (if Yes in step S107), the process of the controller 30 proceeds to step S108. In this case, the refrigerant composition may have changed.

On the other hand, if |ATco| is less than the predetermined threshold ΔT1 (if No in step S107), the process of the controller 30 returns to step S101. In this case, substantially no change has occurred in the refrigerant composition.

In step S108, the controller 30 determines whether the condition in which |ATco| is not less than the predetermined threshold ΔT1 has continued for a predetermined length of time (for example, five minutes). If the controller 30 determines that the condition in which |ATco| is not less than the predetermined threshold ΔT1 has continued for the predetermined length of time (if Yes in step S108), the process of the controller 30 proceeds to step S109. On the other hand, if the controller 30 determines that the condition in which |ΔTco| is not less than the predetermined threshold ΔT1 has not continued for the predetermined length of time (if No in step S108), the process of the controller 30 returns to step S101.

In step S109, the controller 30 determines that a change has occurred in the refrigerant composition.

Incidentally, the controller 30 may be configured to cause the display device 40 (see FIG. 1) to display a message about the occurrence of the change in the refrigerant composition. Furthermore, the controller 30 may be configured to cause the display device 40 to, in addition to the above-mentioned message, display information telling that the proportion of the high-pressure refrigerant components or the low-pressure refrigerant components therein has become greater than that at time of the initial enclosure. Thereby, the user can be informed of the change in the refrigerant composition.

In step S110, the controller 30 corrects the condensation temperature and the evaporation temperature of the refrigerant. In other words, the controller 30 corrects the equation representing the curve (on the high-temperature high-pressure side in FIG. 4) which indicates the relationship between the condenser outlet pressure Pco and the actual saturated liquid temperature (condensation temperature). Thus, in response to the condenser outlet temperature change ΔTco, the controller 30 shifts the curve toward the high-pressure components side or the low-pressure components side. Thereby, the condensation temperature of the refrigerant is corrected. In parallel with the above process, the controller 30 shifts the curve on the low-temperature low-pressure side in FIG. 4 toward the high-pressure components side or the low-pressure components side, and thereby corrects the evaporation temperature.

It should be noted that in a case where the condensation temperature of the refrigerant has become greater than that corresponding to the initial composition, the evaporation temperature of the refrigerant also has become greater than that corresponding to the initial composition.

In step Sill, the controller 30 controls the devices based on the corrected condensation temperature and evaporation temperature. For example, in the case where the above-discussed saturated liquid temperature is used as the criterion, if the temperature detection value of the saturated liquid temperature near the outlet of the outdoor heat exchanger 13 is equal to or greater than a predetermined threshold (for example, in a case where the condenser outlet temperature change ATco is equal to or greater than +2K), there is high likelihood that the proportion of the low-pressure refrigerant components therein has become greater than that at time of the initial enclosure. The higher proportion means that the condensation temperature and the evaporation temperature of the refrigerant have become higher than those at time of the initial enclosure. The controller 30, therefore, controls the devices in order to decrease the suction pressure and the discharge pressure of the compressor 11. To put it specifically, the controller 30 increases the revolution speed of the compressor 11 in order to deal with the former (the suction pressure of the compressor 11), and increases the revolution speed of the outdoor fan 14 in order to deal with the latter (the discharge pressure of the compressor 11). This makes it possible for the refrigeration cycle device to perform the cooling operation appropriately based on the actual refrigerant composition, and to prevent the capability shortage.

Furthermore, for example, in the case where the above-discussed saturated liquid temperature is used as the criterion, if the temperature detection value of the saturated liquid temperature near the outlet of the outdoor heat exchanger 13 is equal to or less than a predetermined threshold (for example, in a case where the condenser outlet temperature change ATco is equal to or less than -2K), there is high likelihood that the proportion of the high-pressure refrigerant components therein has become greater than that at time of the initial enclosure, or that corresponding to the genuine refrigerant. The higher proportion means that the condensation temperature and the evaporation temperature of the refrigerant have become lower than those at time of the initial enclosure. The controller 30, therefore, controls the devices in order to increase the suction pressure and the discharge pressure of the compressor 11. To put it specifically, the controller 30 decreases the revolution speed of the compressor 11 in order to deal with the former (the suction pressure of the compressor 11), and decreases the revolution speed of the outdoor fan 14 in order to deal with the latter (the discharge pressure of the compressor 11). This makes it possible for the refrigeration cycle device to perform the cooling operation appropriately based on the actual refrigerant composition. Because of the appropriate cooling operation, the refrigeration cycle device is capable of: avoiding an excessive drop in the evaporation temperature, and thus preventing intermittent operation; and decreasing fan power, and thus reducing power cost.

What has been discussed above is an example of how the compressor 11 and the outdoor fan 14 are controlled. Depending on load conditions and the like during the cooling operation, the compressor 11 and the outdoor fan 14 may be controlled in a way different from what has been discussed above. For example, when priority is given to performance adjustment, only either of the evaporation temperature and the condensation temperature of the refrigerant may be controlled. For energy saving, the condensation temperature may be controlled with priority.

Otherwise, another method may be employed in which as discussed below, the controller 30 calculates superheating degrees of the refrigerant on the suction and discharge sides of the compressor 11 based on the corrected condensation and evaporation temperatures.

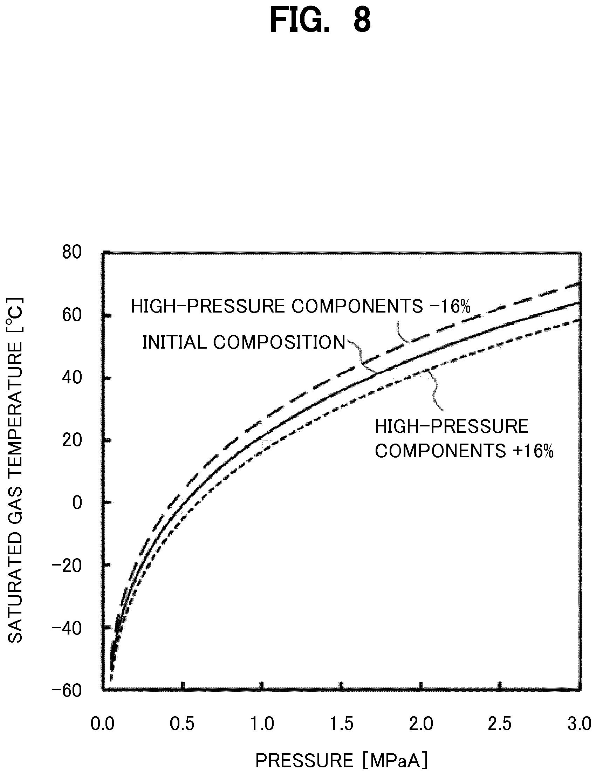

FIG. 8 is an explanatory diagram showing a relationship between the pressure and the saturated gas temperature of refrigerant.

Incidentally, in FIG. 8, the horizontal axis represents the pressure of the refrigerant, while the vertical axis represents the saturated gas temperature of the refrigerant.

The controller 30 corrects equations for respectively calculating a discharge superheating degree and a suction superheating degree of the compressor 11, based on an approximation curve (approximation equation) which represents the saturated gas temperature corresponding to the pressure shown in FIG. 8, and the condenser outlet temperature change $\Delta$Tco.

It should be noted that the "discharge superheating degree" means the superheating degree of the refrigerant on the discharge side of the compressor 11. On the other hand, the "suction superheating degree" means the superheating degree of the refrigerant on the suction side of the compressor 11. The controller 30 controls the devices in order to make the superheating degrees on the suction and discharge sides of the compressor 11 equal to the respective predetermined target superheating degrees. To put it specifically, the controller 30 controls the superheating degree of the refrigerant on the suction side of the compressor 11 by controlling the indoor expansion valve 21 which is located upstream of the indoor heat exchanger 22 working as the condenser. Meanwhile, the controller 30 controls the superheating degree of the refrigerant on the discharge side of the compressor 11 by controlling the amount of refrigerant to be injected into the middle portion of the compressor 11, using the liquid injection valve 17. These make it possible to perform the cooling operation appropriately, and to secure the reliability of the compressor 11.

Next, descriptions will be provided for how to detect whether the amount of refrigerant enclosed in the refrigerant circuit Q is excessive or insufficient (Item (e) mentioned in connection with the process in step S102 in FIG. 5).

For example, in a case where the amount of refrigerant in the refrigerant circuit Q is excessive, the receiver 15 is full of the subcooled liquid, and the refrigerant near the outlet of the outdoor heat exchanger 13 is in a subcooled state. This state raises the condensation pressure of the refrigerant by the subcooling degree, and accordingly invites a decrease in the coefficient of performance (COP) in response to power consumption for raising the discharge pressure of the compressor 11.

In contrast, in a case where the amount of refrigerant in the refrigerant circuit Q is insufficient as a result of refrigerant leakage or the like, almost no liquid refrigerant remains in the receiver 15, and the refrigerant near the outlet of the outdoor heat exchanger 13 is in a gas-liquid two-phase state. To put it specifically, in FIG. 2, the point representing state G5 shifts to the inside of the saturated liquid line, and the specific enthalpy in state G5 accordingly becomes higher than usual. This decreases a specific enthalpy difference in the indoor heat exchanger 22 (a specific enthalpy difference between state G8 and state G1 shown in FIG. 2), and accordingly invites a decrease in refrigeration performance and a decrease in the coefficient of performance. With this taken into consideration, this embodiment determines whether the amount of refrigerant in the refrigerant circuit Q is appropriate, as one of the determination process in step S102 shown in FIG. 5.

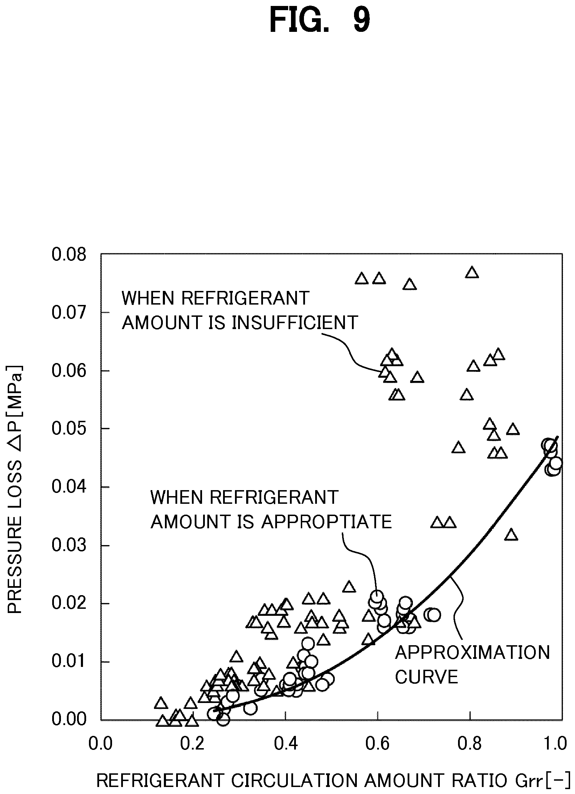

FIG. 9 represents an experiment result showing a relationship between the refrigerant circulation amount ratio Grr and the pressure loss ΔP.

Incidentally, circles in FIG. 9 represent data which are collected when the amount of refrigerant enclosed in the refrigerant circuit Q is appropriate. On the other hand, triangles in FIG. 9 represent data which are collected when the amount of refrigerant is insufficient. In other words, FIG. 9 is obtained by adding the data collected when the amount of refrigerant is insufficient, to the experiment result in FIG. 6.

In the case where the amount of refrigerant is insufficient, the pipe length the refrigerant in the gas-liquid two-phase state flows in the outdoor heat exchanger 13 is longer than otherwise, and the pressure loss ΔP is greater than in the case where the amount of refrigerant is appropriate. The data, therefore, widely spread as shown by the triangles in FIG. 9, and it is accordingly difficult to estimate the pressure loss ΔP.

Although not illustrated in FIG. 9, in the case where the amount of refrigerant is excessive, too, it is difficult to estimate the pressure loss ΔP. This is because: the proportion of the path length the liquid refrigerant flows in the condenser is larger; and the estimated value obtained using Equation (1) is no longer valid. Furthermore, in a case where the condenser outlet temperature is in a subcooled state, the temperature difference ΔT due to the composition change cannot be calculated correctly as long as Equation (6) for estimating the temperature difference ΔT based on the saturated liquid temperature is used.

With these taken into consideration, in the case where the amount of refrigerant is not appropriate, none of the processes in steps S103 to S111 (see FIG. 5) for detecting a change in the refrigerant composition are performed. Incidentally, in a case where refrigerant leaks from somewhere of the pipes during the normal operation, the refrigerant composition hardly changes in many cases because what leaks is refrigerant whose ratio (a ratio of high-pressure components to low-pressure components) remains the same as that in the initial composition.

This is because a leakage point in the pipe means that the leakage occurs in a part where the refrigerant with a composition substantially the same as the initial composition is circulating. In contrast, a place where a leakage more likely to cause the composition change takes place is the upper portion of the receiver 15 which is full of the gaseous refrigerant, as discussed above. The vessel portion of the receiver 15, however, is thicker in wall thickness than other parts, such as the pipes and the heat exchangers, for the purpose of withstanding the pressure. Leakages, therefore, less often occur in the vessel portion of the receiver 15 than in the other parts. In short, the insufficiency of the refrigerant due to refrigerant leakage tends to become noticeable more often than the composition change. Detection and notification to the outside makes it possible to effectively cope with the refrigerant insufficiency.

Incidentally, cases which make the refrigerant composition more likely to change include the above-discussed leak of the gaseous refrigerant from the refrigerant container, and repetition of refrigerant leaks and replenishment. These cases cause not only the refrigerant insufficiency but also the composition change. The composition detection method, therefore, can be used effectively.

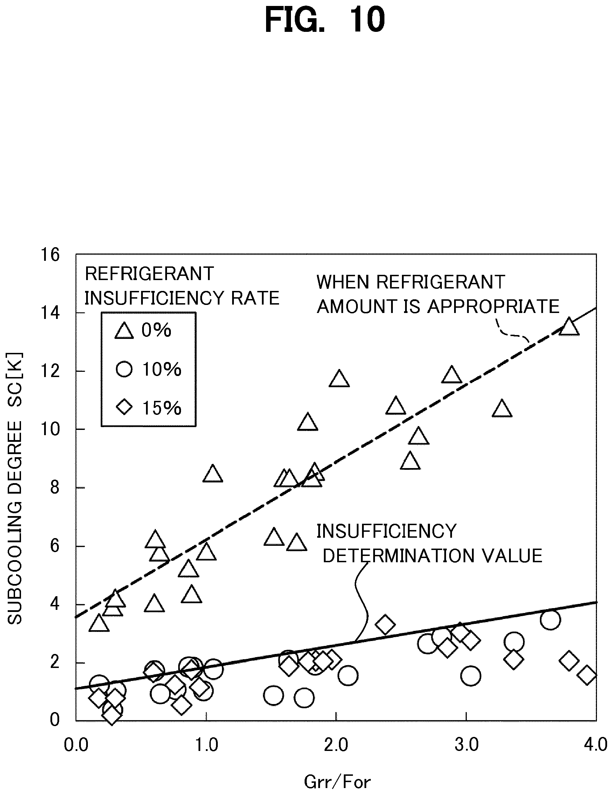

FIG. 10 represents an experiment result showing a characteristic of the subcooling degree which is used to determine whether the amount of refrigerant is appropriate.

The horizontal axis in FIG. 10 represents a value obtained by dividing the refrigerant circulation amount ratio Grr by an outdoor fan revolution speed ratio For. The vertical axis in FIG. 10 represents a subcooling degree SC of the refrigerant cooled by the subcooler 16.

Even in a case where the revolution speed of the compressor 11 and the like, in addition to the temperature of the external air and the evaporation temperature of the refrigerant, change with time, the relationship between the subcooling degree SC and the value (Grr/For) can be approximated to a straight line (a dashed line representing the relationship which is obtained "when the amount of refrigerant is appropriate."

Meanwhile, in cases where the refrigerant insufficiency rate is approximately 10 % (indicated with circles) or approximately 15 % (indicated with diamonds), almost all the data spread under a predetermined straight line which represents an "insufficiency determination value" in FIG. 10. With this taken into consideration, the controller 30 is configured to determine that the amount of refrigerant is insufficient, if the subcooling degree SC is under this straight line for a predetermined length of time.

Incidentally, the "refrigerant insufficiency rate" in FIG. 10 is a rate showing how large the insufficiency of the refrigerant is. A standard by which the refrigerant insufficiency rate is judged is a condition in which almost no excessive liquid refrigerant exists in the receiver 15 and the outlet of the outdoor heat exchanger 13 is barely kept in saturated liquid.

Furthermore, although omitted from FIG. 10, a straight line (not illustrated) representing a criterion for determining whether the amount of refrigerant is excessive may be added above the straight line representing "when the amount of refrigerant is appropriate," to be used to determine that the amount of refrigerant is excessive if the subcooling degree SC is above the added straight line for a predetermined length of time. In this way, based on the subcooling degree SC of the refrigerant cooled by the subcooler 16, the operation condition determination part 32b of the controller 30 determines whether the amount of refrigerant enclosed in the refrigerant circuit Q is appropriate.

Thus, if the amount of refrigerant in the refrigerant circuit Q is not appropriate (that is, if the amount of refrigerant therein is insufficient or if the amount of refrigerant therein is excessive), the controller 30 causes the display device 40 (see FIG. 1) to display information about the inappropriateness. Thereby, the user can be informed that the amount of refrigerant is not appropriate, and therefore can deal with the refrigerant leak and the like adequately.

(Effects)

According to the first embodiment, the change in the refrigerant composition can be detected appropriately and accurately, based on the difference between the saturated liquid temperature based on the data about the initial composition (at time of the initial enclosure) and the detected value of the condenser outlet temperature (step S106 in FIG. 5). In addition, the air conditioner 100 can be provided at lower cost since no specialized part for detecting the change in the refrigerant composition need to be added to the air conditioner 100. Furthermore, according to the first embodiment, the process of detecting the change in the refrigerant composition can be performed during the normal air-conditioning operation.

Moreover, according to the first embodiment, if the controller 30 determines that the refrigerant composition has changed (step S109 in FIG. 5), the controller 30 controls the devices based on the corrected condensation temperature and evaporation temperature (step Sill). This makes it possible to inhibit the performance shortage due to the change in the refrigerant composition, and to prevent insufficient lubrication and liquid compression in the compressor 11 which would otherwise occur when the superheating degree is insufficient. Accordingly, it is possible to achieve labor saving for inspections, cost reduction, energy saving, and an enhancement in reliability.

Besides, the air conditioner 100 according to the first embodiment includes the receiver 15 which is provided upstream of the subcooler 16. Thereby, the refrigerant near the outlet of the outdoor heat exchanger 13 functioning as the condenser can be easily kept in a saturated liquid condition, and the change in the refrigerant composition can be detected appropriately.

What is more, according to the first embodiment, if the controller 30 determines that the amount of refrigerant in the refrigerant circuit Q is not appropriate, the refrigerant composition detection part 32d of the controller 30 suspends the detection of the change in the refrigerant composition. This makes it possible to prevent a false detection of the change in the refrigerant composition.

<<Second Embodiment (in accordance with the invention)>>

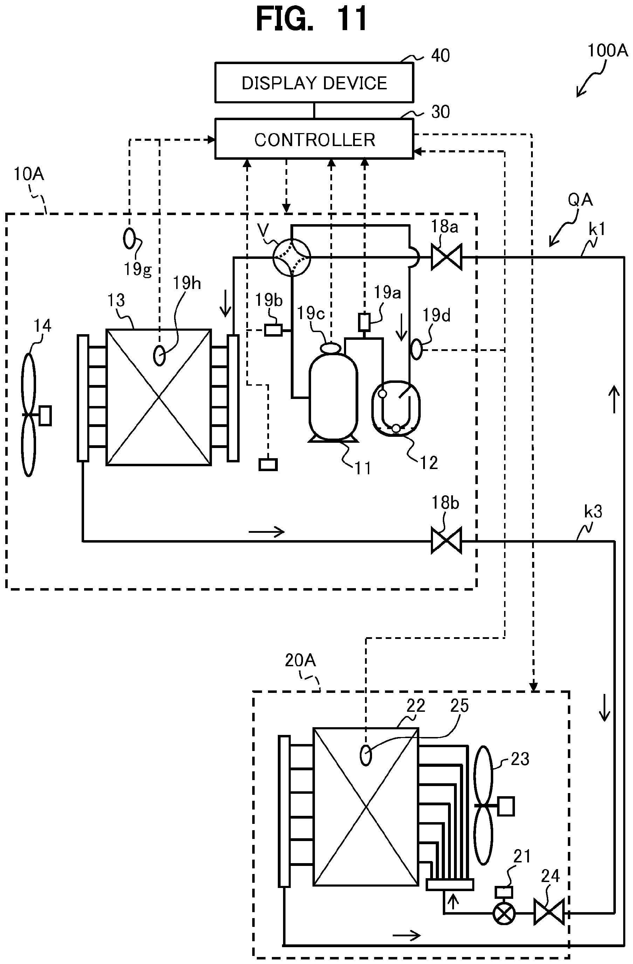

A second embodiment is different from the first embodiment (see FIG. 1) in that an air conditioner 100A (see FIG. 11) includes a four-way valve V, a temperature sensor 19h and another temperature sensor 25. The second embodiment is further different from the first embodiment in that the air conditioner 100A (see FIG. 11) does not include the receiver 15 (see FIG. 1), the subcooler 16 (see FIG. 1), the liquid injection valve 17 (see FIG. 1), or the temperature sensor 19e (see FIG. 1). Incidentally, the rest of the second embodiment is the same as that of the first embodiment. Descriptions, therefore, will be provided for what makes the second embodiment different from the first embodiment, and duplicated descriptions will be omitted.

FIG. 11 is a configuration diagram of the air conditioner 100A according to the second embodiment.

It should be noted that in FIG. 11, directions in which the refrigerant flows during cooling operation are indicated with solid-line arrows (during heating operation, the refrigerant circulates in the reverse directions) . As illustrated in FIG. 11, the air conditioner 100A includes a refrigerant circuit QA, the controller 30 and the display device 40.

The refrigerant circuit QA includes devices installed in an outdoor unit 10A, and devices installed in an indoor unit 20A.

The outdoor unit 10A includes the compressor 11, the four-way valve V, the accumulator 12, the outdoor heat exchanger 13, the outdoor fan 14, a gas check valve 18a, a liquid check valve 18b and the sensors (inclusive of the temperature sensor 19h).

The four-way valve Visa valve configured to switch directions in which the refrigerant flows in the refrigerant circuit Q.

For the cooling operation, the four-way valve V switches flow passages to those indicated with the solid lines, and the refrigerant thus circulates in the refrigerant circuit QA which is established by sequentially connecting the compressor 11, the outdoor heat exchanger 13 (condenser), the indoor expansion valve 21, the indoor heat exchanger 22 (evaporator) into a circle.

For heating operation, the four-way valve V switches flow passages to those indicated with dashed lines, and the refrigerant thus circulates in the refrigerant circuit QA which is established by sequentially connecting the compressor 11, the indoor heat exchanger 22 (condenser) , the indoor expansion valve 21, the outdoor heat exchanger 13 (evaporator) into a circle.

The temperature sensor 19h is a sensor configured to detect temperature near a middle portion of the outdoor heat exchanger 13 (a middle portion of a heat transfer tube in which the refrigerant flows), and is installed in the outdoor heat exchanger 13.

The other temperature sensor 25 is a sensor configured to detect temperature near a middle portion of the indoor heat exchanger 22, and is installed in the indoor heat exchanger 22. Detection values from the temperature sensors 19h, 25 and the like are outputted to the controller 30.

The following descriptions will be provided for how a process of detecting the change in the refrigerant composition is performed during the cooling operation.

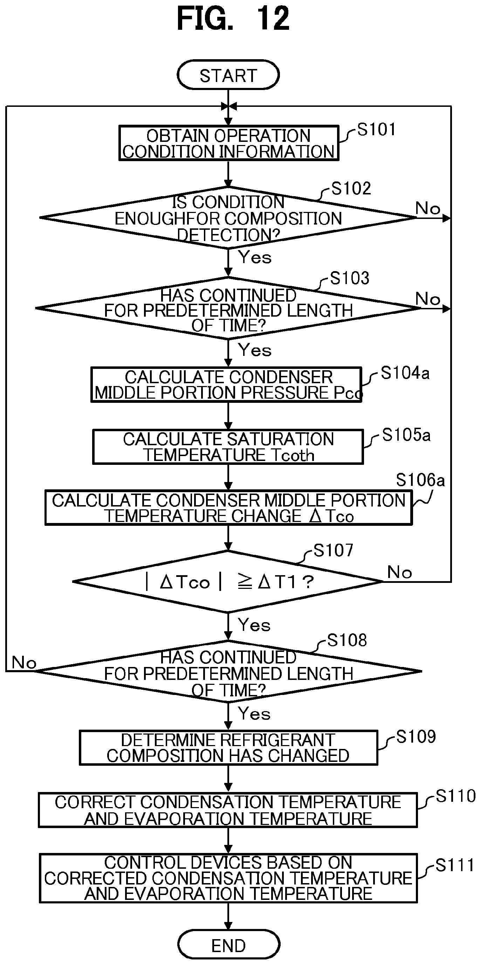

FIG. 12 is a flowchart showing the process to be performed by the controller 30.

Incidentally, processes which are the same as those in the first embodiment (see FIG. 5) will be denoted by the same step numbers. In addition, the flowchart is on condition that cooling operation is being performed at time of "start" in FIG. 12.

If the controller 30 determines in step S103 that the condition which makes it possible to detect the refrigerant composition has continued for the predetermined length of time (if Yes in step S103), the process of the controller 30 proceeds to step S104a.

In step S104a, the controller 30 calculates condenser middle portion pressure (pressure of the refrigerant in the middle portion of the outdoor heat exchanger 13 functioning as the condenser) . In the configuration of FIG. 11 which includes no liquid injection valve 17 (see FIG. 1), first of all, the refrigerant circulation amount ratio Grr is calculated based on Equation (7) given below, instead of Equation (2) discussed in the first embodiment.

$$\mathrm{Grr} = \frac{Ft}{Fto} \times \frac{Ps}{Pso} \qquad\qquad\qquad \text{... Equation (7)}$$

where: Ft is the compressor revolution speed [s$^{-1}$]; Fto is the compressor reference revolution speed [s$^{-1}$]; Ps is suction pressure [MPaA];and Pso is reference suction pressure [MPaA].

Thereafter, based on a calculation result from Equation (7), the controller 30 calculates the pressure loss ∆P using Equation (1) discussed in the first embodiment. In addition, the controller calculates a condenser middle portion pressure Pco based on Equation (4) discussed in the first embodiment. In this way, the controller 30 causes the condenser pressure calculation part 32c (see FIG. 3) to estimate the pressure loss ∆P from the discharge side of the compressor 11 to the middle portion of the outdoor heat exchanger 13 (condenser) based on the pressure detection value on the discharge side of the compressor 11. Furthermore, the controller 30 causes the condenser pressure calculation part 32c to calculate the pressure near the middle portion of the outdoor heat exchanger 13 based on the above-discussed pressure detection value and the pressure loss ∆P.

In step S105a, the controller 30 calculates condenser middle portion saturation temperature Tcoth. To put it specifically, the controller 30 calculates the saturation temperature Tcoth of the refrigerant near the middle portion of the outdoor heat exchanger 13 functioning as the condenser.

The "saturation temperature Tcoth" in this respect is not the saturated liquid temperature (see FIG. 4) discussed in the first embodiment, but is an average temperature of the saturated gas temperature (see FIG. 8) and the saturated liquid temperature (that is to say, an average temperature of the dew and boiling points of the refrigerant) . The "saturation temperature Tcoth" is calculated using Equation (5) as the approximation equation, and by giving the coefficients a, b, c, d in the equation different values from those which are used to calculate the saturated liquid temperature.

Next, in step S106a, the controller 30 calculates a condenser middle portion temperature change ∆Tco. To put it specifically, the controller 30 calculates the temperature change ATco in the condenser middle portion based on a difference between the detection value from the temperature sensor 19h installed near the middle portion of the outdoor heat exchanger 13 (condenser) and the saturation temperature Tcoth calculated in step S105a.

It should be noted that processes in step S107 to S111 are the same as those in the first embodiment, and descriptions for them will be omitted. Above discussed above, the controller 30 causes the refrigerant composition detection part 32d (see FIG. 3) to estimate the saturation temperature of the refrigerant based on the pressure near the middle portion of the condenser. Thereafter, the controller 30 causes the refrigerant composition detection part 32d to detect the change in the refrigerant composition based on the difference between the saturation temperature and the temperature detection value of the refrigerant near the middle portion of the condenser.

Note that the determination on whether the amount of refrigerant enclosed in the refrigerant circuit QA is appropriate is made based on the subcooling degree of the refrigerant near the outlet of the condenser (the outdoor heat exchanger 13 or the indoor heat exchanger 22). Meanwhile, the process during the heating operation is performed using things such as the detection value from the temperature sensor 25 which is installed in the indoor heat exchanger 22 functioning as the condenser.

In addition, when the pressure loss from the discharge side of the compressor to the middle portion of the condenser during the heating operation is calculated using Equation (1), the coefficient KL (pipe length correction coefficient) is set at a value corresponding to the pipe length of the connection pipe K1. To put it specifically, the coefficient is set by manipulating a dip switch in the controller 30 or a setting screen. This makes it possible to accurately calculate the pressure loss to the middle portion of the condenser, and to enhance accuracy with which to detect the composition change.

A specific example of the control based on the saturation temperature of the refrigerant is as follows. The controller 30 uses the saturation temperature of the refrigerant as a criterion, and makes the revolution speed of the compressor 11 higher than when the refrigerant is initially filled into the refrigerant circuit Q if the temperature detection value of the refrigerant near the middle portion of the condenser is equal to or greater than a predetermined value. Furthermore, the controller 30 uses the saturation temperature of the refrigerant as the criterion, and makes the revolution speed of the compressor 11 lower than when the refrigerant is initially filled there into if the temperature detection value of the refrigerant near the middle portion of the condenser is equal to or less than a predetermined value. The control like this makes it possible to perform the air-conditioning operation appropriately depending on the change in the refrigerant composition.

(Effects)

The air conditioner 100A according to the second embodiment does not include the receiver 15 (see FIG. 1) or the like. There is a case where the refrigerant near the outlet of the condenser (the indoor heat exchanger 22 or the outdoor heat exchanger 13) is not in the saturated liquid condition. With this taken into condition, the second embodiment is configured to detect the change in the refrigerant composition based on things such as the temperature detection value from the middle portion of the condenser, instead of from the outlet of the condenser. In the middle portion of the condenser, the refrigerant is often in the gas-liquid two-phase state. This makes it possible to appropriately perform the process of determining whether the refrigerant composition has changed.

<<Modifications>>

Although the embodiments have described the air conditioners 100, 100A according to the present invention, the present invention is not limited to what have been described, and can be variously modified.

The descriptions have been provided for the embodiments in which the refrigerant filled into the refrigerant circuit Q, QA is R448A. The refrigerant, however, is not limited to R448A. To put it specifically, different non-azeotropic mixed refrigerants such as R407C, R407F, R407E, R407H, R449A, R452A and R447A may be used.

Let us expound on the non-azeotropic mixed refrigerant to be used in the present invention. It is desirable that the non-azeotropic mixed refrigerant include R32 and R125 with a saturation pressure of approximately 2.5 MPa at a condensation temperature of 40 °C, as well as R134a and R1234yf with a saturation pressure of approximately 1.0 MPa at the condensation temperature of 40 °C. Their inclusion enables the non-azeotropic mixed refrigerant to obtain the same operating pressure as widely-used traditional refrigerants such as R22, R407C and R404A, as well as makes it possible to decrease the GWP (global warming potential) of the refrigerant, and to inhibit the flammability of the refrigerant.

Typical examples of such a refrigerant are R448A (R32/R125/R134a/R1234yf/R1234ze(E)=26/26/21/20/7 wt%) and R449A (R32/R125/R134a/R1234yf=24.3/24.7/25.7/25.3 wt%). The above-mentioned refrigerants are non-azeotropic refrigerants obtained by mixing the multiple refrigerant components. Their temperature glides, or differences between their boiling points (saturated liquid temperatures) and their dew points (saturated gas temperatures), are approximately equal to or greater than 4K. These refrigerants need careful attention since the above-discussed composition change occurs while they are in use, and when they are filled into the refrigerant circuit. Introduction of the composition detection technology of the present invention, therefore, is very effective for the refrigerants.

Furthermore, addition of R744 to the above-mentioned refrigerants makes it possible to raise the operating pressure of the refrigerants, and to increase the performance per volume of the refrigerants. This makes it possible to achieve the compressor 11 and the connection pipes in a compact size, and to minimize initial costs.

On the other hand, the mixture of R744 further enhances the non-azeotropic properties, and R744 has a temperature glide of approximately 6K or greater. This makes careful attention to the composition change accordingly becomes more important. The introduction of the composition detection technology according to the present invention is the more effective because the technology makes it possible to inhibit a decrease in the performance and a decrease in the efficiency, and to use the refrigerant mixed with R744 having great non-azeotropic properties better.

The composition detection technology according to the present invention can be used further for: pseudo-azeotropic refrigerants such as R410A and R404A; HFO1123-containing mixed refrigerants which have a temperature glide of approximately less than 2K; and single refrigerants such as R32 and R744. In the case where the composition detection technology is used for one of such refrigerants, the technology makes it possible to determine whether a filled refrigerant is a genuine one. Display of a warning against filling wrong refrigerants (a refrigerant composition change from the composition of the genuine refrigerant) makes it possible to prevent filling of wrong refrigerants such as flammable refrigerants, which are excluded from device design considerations, and to inhibit decreases in the performance and efficiency of the air conditioner 100, 100A.

Furthermore, although the embodiments have discussed the process of determining whether the refrigerant composition can be detected based on the operation condition information (step S102 in FIGS. 5 and 12), the determination process is not limited to being performed based on the operation condition information. The operation condition determination part 32b may be configured to determine whether the refrigerant composition can be detected, for example, by accumulating operation condition information for a predetermined length of time, and based on the accumulated operation condition information (for example, based on an average value of predetermined operation condition information).

Moreover, although the first embodiment has discussed the process in which if the controller 30 detects a change in the refrigerant composition, the controller 30 corrects both the condensation temperature and the evaporation temperature of the refrigerant based on the difference between the saturated liquid temperature and the temperature detection value of the refrigerant near the outlet of the condenser, the process is not limited to that which corrects both the condensation temperature and the evaporation temperature. To put it specifically, the controller 30 may be configured such that if the refrigerant composition detection part 32d detects the change in the refrigerant composition, the controller 30 corrects at least one of the condensation temperature and the evaporation temperature of the refrigerant based on the difference, and further controls the compressor 11 based on the at least one corrected temperature. This is also the case with the second embodiment.

Otherwise, the controller 30 may be configured to control the compressor 11 in order to make the superheating degrees on the suction and discharge sides of the compressor 11 equal to predetermined target values based on the at least one corrected temperature.

Besides, although the embodiments have discussed the configuration in which the air conditioners 100, 100A each include the display device 40, the display device 40 may be omitted. In the case where the display unit 40 is omitted, the conditions of the composition and the amount of refrigerant can be informed by reporting them to the outside from the communication section 31 (see FIG. 3).

In addition, although the embodiments have discussed the configuration in which the "refrigeration cycle device" is either of the air conditioners 100, 100A, such as a packaged air conditioner or a room air conditioner, the "refrigeration cycle device" is not limited to the air conditioners. The embodiments are applicable, for example, to a freezer and a refrigerator as the "refrigeration cycle device."

Furthermore, although the embodiments have discussed the configuration in which the controller 30 is provided outside the outdoor unit 10 and the indoor unit 20 (see FIGS. 1 and 11), the controller 30 is not limited to being provided outside them. The controller 30 may be installed in either or both of the outdoor unit 10 and the indoor unit 20.

Moreover, the embodiments can be combined together depending on the necessity. For example, the first and second embodiments may be combined to form a configuration in which: the air conditioner 100 includes the receiver 15, the subcooler 16 and the other devices (FIG. 1); and a change in the refrigerant composition is detected based on things such as the temperature detection value in the middle portion of the condenser.

Besides, some or all of the components illustrated in FIG. 3 and the like may be implemented as hardware by doing things such as designing them on an integrated circuit, or may be implemented as software by causing a processor, such as a CPU, to interpret and execute programs for implementing the functions. Information such as programs, tables, files and the like for implementing the functions may be stored in a hard disc (HD), or a recording device such as a memory or a solid state drive (SSD), or a recording medium such as an integrated circuit (IC) card, a secure digital (SD) card or a digital versatile disc (DVD).

What is more, although the embodiments have been described in detailed for the sake of easy-to-understand explanation of the present invention, the present invention is not necessarily limited to what includes all the described components. The invention is solely limited by the appended claims.

Furthermore, the above mechanisms, components and configurations have been shown as what are considered necessary for the explanation, but all of the mechanisms, components and configurations needed for products are not necessarily shown.

**Claims**

1. A refrigeration cycle device comprising:

> a refrigerant circuit (Q) in which refrigerant circulates sequentially via a compressor (11), a condenser (13), an expansion valve (21) and an evaporator (22) in a refrigeration cycle (Q); and
> a controller (30) configured to control at least the compressor (11) and the expansion valve (21), **characterized in that**
> the controller (30) includes
>
> > a condenser pressure calculation part (32c) configured to estimate pressure loss from a discharge side of the compressor (11) to a middle portion of the condenser (13) based on a pressure detection value on the discharge side of the compressor (11), and to calculate pressure near the middle portion of the condenser (13) based on the pressure detection value and the pressure loss, and
> > a refrigerant composition detection part (32d) configured to estimate saturation temperature, which is average temperature of dew and boiling points of the refrigerant, based on the pressure near the middle portion of the condenser (13), and to detect a change in a refrigerant composition based on a difference between the saturation temperature and a temperature detection value of the refrigerant near the middle portion of the condenser (13).

2. The refrigeration cycle device according to claim 1, wherein the refrigerant composition detection part (32d) is configured to estimate the pressure loss using a refrigerant circulation amount ratio based on at least a suction pressure and a revolution speed of the compressor (11).

3. The refrigeration cycle device according to claim 1, wherein the refrigerant circulating in the refrigerant circuit (Q) is a non-azeotropic mixed refrigerant.

4. The refrigeration cycle device according to claim 1, wherein the controller (30) is configured to make a revolution speed of the compressor (11) higher than when the refrigerant is initially filled into the refrigerant circuit (Q), if the temperature detection value is higher than the saturation temperature as a criterion by a predetermined threshold or more, and to make the revolution speed of the compressor (11) lower than when the refrigerant is initially filled thereinto, if the temperature detection value is lower than the saturation temperature as the criterion by a predetermined threshold or more.

5. The refrigeration cycle device according to claim 1, further comprising a display device (40) configured to display a result of the detection by the refrigerant composition detection part (32d).

6. The refrigeration cycle device according to claim 1, further comprising:

> a receiver (15) installed downstream of the condenser (13), and configured to store excessive refrigerant;
> a subcooler (16) configured to subcool refrigerant which is guided into the subcooler (16) from the receiver; and
> a determination part (32b) configured to determine whether an amount of refrigerant enclosed in the refrigerant circuit (Q) is appropriate, based on a subcooling degree of the refrigerant subcooled by the subcooler (16), wherein
> if the determination part (32b) determines that the amount of refrigerant is not appropriate, the refrigerant composition detection part (32d) does not detect whether the refrigerant composition has changed.

7. The refrigeration cycle device according to claim 1, wherein if the refrigerant composition detection part (32d) detects a change in the refrigerant composition, the controller (30) is configured to correct at least one of the condensation temperature and the evaporation temperature of the refrigerant based on the difference, and to control the compressor (11) based on the at least one corrected temperature.

8. The refrigeration cycle device according to claim 1, wherein if the refrigerant composition detection part (32d) detects a change in the refrigerant composition, the controller (30) is configured to correct at least one of the condensation temperature and the evaporation temperature of the refrigerant based on the difference, and to control the compressor (11) based on the at least one corrected temperature, in order to make overheating degrees of a suction side and the discharge side of the compressor (11) equal to a predetermined target value.

**Patentansprüche**

1. Kühlkreisvorrichtung, die Folgendes umfasst:

   einen Kühlmittelkreis (Q), in dem ein Kühlmittel nacheinander über einen Kompressor (11), einen Kondensator (13), ein Entspannungsventil (21) und einen Verdampfer (22) in einem Kühlkreis (Q) umläuft; und
   eine Steuereinheit (30), die konfiguriert ist, zumindest den Kompressor (11) und das Entspannungsventil (21) zu steuern,
   **dadurch gekennzeichnet, dass**
   die Steuereinheit (30) Folgendes enthält:

   eine Kondensatordruck-Berechnungskomponente (32c), die konfiguriert ist, auf der Grundlage eines Druckdetektionsventils auf der Auslassseite des Kompressors (11) einen Druckverlust von einer Auslassseite des Kompressors (11) zu einem Mittenabschnitt des Kondensators (13) zu schätzen und auf der Grundlage des Druckdetektionsventils und des Druckverlustes einen Druck in der Nähe des Mittenabschnitts des Kondensators (13) zu berechnen, und
   eine Kühlmittelzusammensetzungs-Detektionskomponente (32d), die konfiguriert ist, auf der Grundlage des Drucks in der Nähe des Mittenabschnitts des Kondensators (13) eine Sättigungstemperatur zu schätzen, die die durchschnittliche Temperatur der Tau- und Siedepunkte des Kühlmittels ist, und auf der Grundlage einer Differenz zwischen der Sättigungstemperatur und einem Temperaturdetektionswert des Kühlmittels in der Nähe des Mittenabschnitts des Kondensators (13) eine Änderung einer Kühlmittelzusammensetzung zu detektieren.

2. Kühlkreisvorrichtung nach Anspruch 1, wobei die Kühlmittelzusammensetzungs-Detektionskomponente (32d) konfiguriert ist, den Druckverlust unter Verwendung eines Kühlmittel-Umlaufmengenverhältnisses auf der Grundlage von zumindest einem Ansaugdruck und einer Drehzahl des Kompressors (11) zu schätzen.

3. Kühlkreisvorrichtung nach Anspruch 1, wobei das Kühlmittel, das im Kühlmittelkreis (Q) umläuft, ein nicht azeotrop gemischtes Kühlmittel ist.

4. Kühlkreisvorrichtung nach Anspruch 1, wobei die Steuereinheit (30) konfiguriert ist zu bewirken, dass eine Drehzahl des Kompressors (11) höher ist als dann, wenn das Kühlmittel anfänglich in den Kühlmittelkreis (Q) eingefüllt wird, wenn der Temperaturdetektionswert um einen vorgegebenen Schwellenwert oder mehr höher als die Sättigungstemperatur als ein Kriterium ist, und zu bewirken, dass die Drehzahl des Kompressors (11) niedriger ist als dann, wenn das Kühlmittel anfänglich darin eingefüllt wird, wenn der Temperaturdetektionswert um einen vorgegebenen Schwellenwert oder mehr niedriger als die Sättigungstemperatur als das Kriterium ist.

5. Kühlkreisvorrichtung nach Anspruch 1, die ferner eine Anzeigevorrichtung (40) umfasst, die konfiguriert ist, ein Ergebnis der Detektion durch die Kühlmittelzusammensetzungs-Detektionskomponente (32d) anzuzeigen.

6. Kühlkreisvorrichtung nach Anspruch 1, die ferner Folgendes umfasst:

   eine Aufnahmeeinrichtung (15), die stromabwärts des Kondensators (13) installiert ist und konfiguriert ist, überschüssiges Kühlmittel zu speichern;
   eine Unterkühlungseinheit (16), die konfiguriert ist, Kühlmittel, das von der Aufnahmeeinrichtung in die Unterkühlungseinheit (16) geleitet wird, zu unterkühlen; und
   eine Bestimmungskomponente (32b), die konfiguriert ist, auf der Grundlage eines Unterkühlungsgrads des Kühlmittels, das durch die Unterkühlungseinheit (16) unterkühlt wird, zu bestimmen, ob eine Kühlmittelmenge, die im Kühlmittelkreis eingeschlossen ist, angemessen ist, wobei
   dann, wenn die Bestimmungskomponente (32b) bestimmt, dass die Kühlmittelmenge nicht angemessen ist, die Kühlmittelzusammensetzungs-Detektionskomponente (32d) nicht detektiert, ob sich die Kühlmittelzusammensetzung geändert hat.

7. Kühlkreisvorrichtung nach Anspruch 1, wobei dann, wenn die Kühlmittelzusammensetzungs-Detektionskomponente (32d) eine Änderung der Kühlmittelzusammensetzung detektiert, die Steuereinheit (30) konfiguriert ist, auf der Grundlage der Differenz die Kondensationstemperatur und/oder die Verdampfungstemperatur des Kühlmittels zu korrigieren und den Kompressor (11) auf der Grundlage der mindestens einen korrigierten Temperatur zu steuern.

8. Kühlkreisvorrichtung nach Anspruch 1, wobei dann, wenn die Kühlmittelzusammensetzungs-Detektionskomponente (32d) eine Änderung der Kühlmittelzusammensetzung detektiert, die Steuereinheit (30) konfiguriert ist, auf der Grundlage der Differenz die Kondensationstemperatur und/oder die Verdampfungstemperatur des Kühlmittels zu korrigieren und den Kompressor (11) auf der Grundlage der mindestens einen korrigierten Temperatur zu steuern, um zu bewirken, dass die Überhitzungsgrade einer Ansaugseite und der Auslassseite des Kompressors (11) gleich einem vorgegebenen Sollwert sind.

**Revendications**

1. Dispositif de cycle de réfrigération comprenant :

   un circuit de réfrigérant (Q) dans lequel le réfrigérant circule séquentiellement via un compresseur (11), un condensateur (13), une vanne d'expansion (21) et un évaporateur (22) dans un cycle de réfrigération (Q) ; et
   un contrôleur (30) configuré pour commander au moins le compresseur (11) et la vanne d'expansion (21),
   **caractérisé en ce que**
   le contrôleur (30) inclut
   une partie de calcul de pression de condensateur (32c) configurée pour estimer une perte de pression depuis un côté de décharge du compresseur (11) jusqu'à une portion médiane du condensateur (13) sur la base d'une valeur de détection de température sur le côté de décharge du compresseur (11), et pour calculer une pression près de la portion médiane du condensateur (13) sur la base de la valeur de détection de pression et de la perte de pression, et
   une partie de détection de composition de réfrigérant (32d) configurée pour estimer une température de saturation, qui est une température moyenne de points de rosée et d'ébullition du réfrigérant, sur la base de la pression près de la portion médiane du condensateur (13), et pour détecter un changement dans une composition de réfrigérant sur la base d'une différence entre la température de saturation et une valeur de détection de température du réfrigérant près de la portion médiane du condensateur (13).

2. Dispositif de cycle de réfrigération selon la revendication 1, dans lequel la partie de détection de composition de réfrigérant (32d) est configurée pour estimer la perte de pression en utilisant un rapport de quantité de circulation de réfrigérant sur la base d'au moins une pression d'aspiration et d'une vitesse de rotation du compresseur (11).

3. Dispositif de cycle de réfrigération selon la revendication 1, dans lequel le réfrigérant circulant dans le circuit de réfrigérant (Q) est un réfrigérant mixte non azéotropique.

4. Dispositif de cycle de réfrigération selon la revendication 1, dans lequel le contrôleur (30) est configuré

   pour rendre une vitesse de rotation du compresseur (11) plus élevée que quand le réfrigérant est initialement rempli dans le circuit de réfrigérant (Q), si la valeur de détection de température est plus élevée que la température de saturation comme critère à raison d'un seuil prédéterminé ou plus, et
   pour rendre la vitesse de rotation du compresseur (11) plus basse que quand le réfrigérant est initialement rempli à l'intérieur, si la valeur de détection de température est plus basse que la température de saturation comme critère à raison d'un seuil prédéterminé ou plus.

5. Dispositif de cycle de réfrigération selon la revendication 1, comprenant en outre un dispositif d'affichage (40) configuré pour afficher un résultat de la détection par la partie de détection de composition de réfrigérant (32d).

6. Dispositif de cycle de réfrigération selon la revendication 1, comprenant en outre :

   un moyen de réception (15) installé en aval du condensateur (13), et configuré pour stocker du réfrigérant en excès ;
   un sous-refroidisseur (16) configuré pour sous-refroidir un réfrigérant qui est guidé jusque dans le sous-refroidisseur (16) depuis le moyen de réception ; et

une partie de détermination (32b) configurée pour déterminer si une quantité de réfrigérant enfermée dans le circuit de réfrigérant (Q) est appropriée, sur la base d'un degré de sous-refroidissement du réfrigérant sous-refroidi par le sous-refroidisseur (16), dans lequel

si la partie de détermination (32b) détermine que la quantité de réfrigérant n'est pas appropriée, la partie de détection de composition de réfrigérant (32d) ne détecte pas si la composition de réfrigérant a changé.

7. Dispositif de cycle de réfrigération selon la revendication 1, dans lequel, si la partie de détection de composition de réfrigérant (32d) détecte un changement dans la composition de réfrigérant, le contrôleur (30) est configuré pour corriger au moins une température parmi la température de condensation et la température d'évaporation du réfrigérant sur la base de la différence, et pour commander le compresseur (11) sur la base de ladite au moins une température corrigée.

8. Dispositif de cycle de réfrigération selon la revendication 1, dans lequel, si la partie de détection de composition de réfrigérant (32d) détecte un changement dans la composition de réfrigérant, le contrôleur (30) est configuré pour corriger au moins température parmi la température de condensation et la température d'évaporation du réfrigérant sur la base de la différence, et pour commander le compresseur (11) sur la base de ladite au moins une température corrigée, afin de rendre des degrés de surchauffe d'un côté d'aspiration et du côté de décharge du compresseur (11) égaux à une valeur cible prédéterminée.

# FIG. 1

# FIG. 2

# FIG. 3

```
                              ～30
┌─────────────────────────────────────────────────────────┐
│                      CONTROLLER                           │
│                                                           │
│                         ～32                              │
│              ┌──────────────────────────┐                │
│              │       ARITHMETIC         │                │
│      ～31    │  PROCESSING SECTION ～32a │                │
│  ┌──────────┐│  ┌────────────────────┐  │                │
│  │COMMUNICA-│││  │OPERATION INFORMATION│ │                │
│  │ TION     │┼┤  │  OBTAINING PART    │  │                │
│  │ SECTION  │││  └────────────────────┘  │    ～33        │
│  └──────────┘│           ～32b           │  ┌─────────┐   │
│              │  ┌────────────────────┐  │  │ STORAGE │   │
│              │  │OPERATION CONDITION │  │  │ SECTION │   │
│              │  │ DETERMINATION PART │  │  └─────────┘   │
│              │  └────────────────────┘  │                │
│              │           ～32c           │                │
│              │  ┌────────────────────┐  │                │
│              │  │CONDENSER PRESSURE  │  │                │
│              │  │ CALCULATION PART   │  │                │
│              │  └────────────────────┘  │                │
│              │           ～32d           │                │
│              │  ┌────────────────────┐  │                │
│              │  │REFRIGERANT COMPOSI-│  │                │
│              │  │ TION DETECTION PART│  │                │
│              │  └────────────────────┘  │                │
│              │           ～32e           │                │
│              │  ┌────────────────────┐  │                │
│              │  │OUTPUT PROCESSING   │  │                │
│              │  │      PART          │  │                │
│              │  └────────────────────┘  │                │
│              └──────────────────────────┘                │
└─────────────────────────────────────────────────────────┘
```

# FIG. 4

# FIG. 5

START

OBTAIN OPERATION
CONDITION INFORMATION —S101

IS CONDITION ENOUGH FOR
COMPOSITION DETECTION? —S102 No

Yes

HAS CONTINUED
FOR PREDETERMINED LENGTH
OF TIME? —S103 No

Yes

CALCULATE CONDENSER
OUTLET PRESSURE Pco —S104

CALCULATE SATURATED
LIQUID TEMPERATURE Tcoth —S105

CALCULATE CONDENSER OUTLET
TEMPERATURE CHANGE $\Delta$Tco —S106

$|\Delta Tco| \geqq \Delta T1$ ? —S107 No

Yes

No HAS CONTINUED FOR
PREDETERMINED LENGTH
OF TIME? —S108

Yes

DETERMINE REFRIGERANT
COMPOSITION HAS CHANGED —S109

CORRECT CONDENSATION TEMPERATURE
AND EVAPORATION TEMPERATURE —S110

CONTROL DEVICES BASED ON CORRECTED
CONDENSATION TEMPERATURE
AND EVAPORATION TEMPERATURE —S111

END

# FIG. 6

# FIG. 7

# FIG. 8

# FIG. 9

# FIG. 10

# FIG. 11

# FIG. 12

```
            START

┌─────────────────────────────────┐
│  OBTAIN OPERATION                │  S101
│  CONDITION INFORMATION           │
└─────────────────────────────────┘

      IS CONDITION
    ENOUGHFOR COMPOSITION    S102   No
      DETECTION?

              Yes

      HAS CONTINUED
  FOR PREDETERMINED LENGTH   S103   No
        OF TIME?

              Yes

┌─────────────────────────────────┐
│  CALCULATE CONDENSER             │  S104a
│  MIDDLE PORTION PRESSURE Pco     │
└─────────────────────────────────┘

┌─────────────────────────────────┐
│  CALCULATE SATURATION            │  S105a
│  TEMPERATURE Tcoth               │
└─────────────────────────────────┘

┌─────────────────────────────────┐
│ CALCULATE CONDENSER MIDDLE PORTION │ S106a
│ TEMPERATURE CHANGE ΔTco          │
└─────────────────────────────────┘

      |ΔTco| ≧ ΔT1 ?        S107   No

              Yes

      HAS CONTINUED
No  FOR PREDETERMINED LENGTH  S108
        OF TIME?

              Yes

┌─────────────────────────────────┐
│  DETERMINE REFRIGERANT           │  S109
│  COMPOSITION HAS CHANGED         │
└─────────────────────────────────┘

┌─────────────────────────────────┐
│ CORRECT CONDENSATION TEMPERATURE │ S110
│ AND EVAPORATION TEMPERATURE      │
└─────────────────────────────────┘

┌─────────────────────────────────┐
│    CONTROL DEVICES BASED ON      │  S111
│ CORRECTED CONDENSATION TEMPERATURE │
│ AND EVAPORATION TEMPERATURE      │
└─────────────────────────────────┘

             END
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008157621 A

- EP 2924372 A1